# EUROPEAN PATENT APPLICATION

(11) **EP 2 249 190 A2**
(43) Date of publication of application: **10.11.2010**
(21) Application number: 10154676.0
(22) Date of filing: 25.02.2010
(51) Int. Cl.: G02B 6/38

(54) **Short profile optical connector**

(30) Priority: 07.05.2009 US 176244 P; 11.09.2009 US 584758
(71) Applicant: OFS Fitel, LLC, Norcross GA 30071 (US)
(72) Inventor: Morra, Michael A., Cumming, GA 30040 (US); Sandels, Gregory A., Buford, GA 30519 (US); Siereveld, John L., Marietta, GA 30066 (US); White, Willard C., Suwannee, GA 30024 (US)
(74) Representative: Schoppe, Fritz

(57) **Abstract**

A connector (10) that allows fiber optic cables to terminate at equipment in cabinets with little space available for cable routing, without over bending. The connector includes a housing, and a yoke (38) including a collar (40) joined to a rear end of the housing. A tubular cable bend limiter (50) is fixed at one end to the collar and the limiter directs a cable containing one or more bend insensitive fibers through a bend of, e.g., 90 degrees, between the collar and the opposite end of the limiter with a fiber bend radius (R_{B}) of less than one inch (25.4 mm). If the limiter creates a fiber bend radius of 0.300 inch (7.62 mm), the distance between the front of the connector and the cable after bending may be 1.26 inches (32 mm) or less. Thus, when terminated with the connector, the cable can be routed in limited space without impairing performance.

## Description

### BACKGROUND OF THE INVENTION

### Field of the Invention

The present invention relates to connectors for terminating cables used in communication and information systems, and particularly to connectors for fiber optic cables.

### Discussion of the Known Art

Network system managers often need to enlarge the space available inside equipment cabinets in situ, in order to accommodate new and more complex multi-function plug-in modules. The modules are configured to be mounted on frames inside a cabinet and behind a main panel. The additional space is usually obtained by repositioning the main panel closer to a front door on the cabinet, thus reducing the space between the panel and the back of the cabinet door. The space between the panel and the door is occupied, however, by a number of network cables which are terminated at the front faces of the modules. Therefore, any reduction of this space makes it more difficult to terminate the cables directly in front of the modules without having to bend the cables excessively, or implementing so-called cross connects at other locations inside the cabinet.

Electrical cables can be terminated with connectors that form sharp 90-degree bends with respect to their mating connectors on the modules, without adverse impact on the performance of the cables. That is, electrical cables can be routed in close proximity to those modules where the cables terminate, without having to bend the cables to any significant degree. Optical fibers can not, however, be made to bend with less than a specified minimum bend radius without permanent damage. The minimum bend radius for most optical fibers is about one inch. In the past, the depth of open cabinet space remaining in front of the modules was ample for routing and terminating optical cables without violating the minimum bend radius of the fibers in the cables. As mentioned, however, the depth of this space is frequently being reduced in order to make room for newer replacement modules.

When undue stress is induced in an optical fiber near an associated connecter, insertion loss is likely to increase. Loss will occur when a fiber is bent at or near a point where it emerges from the rear of a connector, often as a result of an off-axis tensile load on the cable or cordage in which the fiber is contained. Most optical cable connectors include stiff cable retention elements at the rear of the connector, and cord-like cable strength members that run axially inside the cable are retained by crimping end lengths of the strength members in the retention elements. While providing adequate anchoring for the cable against axial tensile loads, the retention elements can cause loss problems for the optical fiber if the cable is subjected to bending near the retention elements. Thus, providing the support needed by a fiber to sustain off-axis tensile loading at the rear of the connector while heeding the minimum bend radius for the fiber, have proven to be difficult.

Reductions in the overall length of optical cable connectors have been made by replacing straight cable bend limiters or strain relief boots typically provided at the rear of the connector, with pre-bent boots molded to provide either a 45 or a 90 degree cable bend close to the rear of the connector while preserving a minimum bend radius. Molded clips have also been used to force flexible bend limiting boots to make more consistent 45 or 90 degree cable bends at the rear of optical cable connectors.

Another known approach is to keep the boot straight but to shorten its length so as to allow the fiber to initiate a bend closer to the rear of the connector. So-called short boot LC and SC optical connectors are commercially available from OFS Fitel, LLC of Norcross, Georgia USA, and other sources. A cable may initiate a bend starting at a distance of about 42.4 mm from the front tip of a typical LC short boot connector, or a distance of about 52.0 mm for a typical SC short boot connector. See generally, U.S. Pats. No. 5,347,603 (Sep. 13, 1994), No. 5,390,272 (Feb. 14, 1995), No. 6,629,783 (Oct. 7, 2003), and No. 7,001,081 (Feb. 21, 2006).

Another solution involves the installation of connector adapters in the face plates of the modules, wherein the adapters are configured so that fiber optic cables need to form only a 45 degree rather than a 90 degree bend in order to connect to the adapters. But module face plates using such adapters often do so at the expense of much needed space inside the module. With increasing complexity in the module circuit boards, the use of adapters, or of so-called small form factor (SFF) transceiver modules arranged to mount at a 45 degree inclination inside a cabinet, has been on the decline.

U.S. Pat. Application Pub. No. 2008/0240657 (Oct. 2, 2008) discloses a right-angle optical fiber connector assembly in the form of a rigid ferrule having an interior region which forms one or more right angle bends. So-called bend performance fibers traverse the interior region between connectors at each end of the ferrule, and the fibers have a minimum bend radius which is less than that of the interior region at the right angle bends.

Bend performance optical fibers, also referred to as bend resistant or bend insensitive fibers (BIF), are described in U.S. Pat. No. 7,257,293 (Aug. 14, 2007), and in U.S. Pat. Application Pubs. No. 2007/0104437 (May 10, 2007), No. 2008/0166094 (Jul. 10, 2008), and No. 2009/0060437 (Mar. 5, 2009). Fibers manufactured as disclosed in the last cited publication exhibit minimum bend radii as small as 4 mm and are available from OFS Fitel, LLC of Norcross, Georgia USA, under the registered mark EZ Bend c, as well as from other commercial sources.

### SUMMARY OF THE INVENTION

The inventive connector construction enables fiber optic cables to terminate at equipment installed in cabinets where little space remains available for cable routing, without having to bend the cables to such an extent that their performance may become impaired.

According to the invention, an optical cable connector construction includes a connector housing having an axis, a front end, and a rear end. A yoke including a collar is joined to the rear end of the connector housing in axial alignment with the housing. A tubular cable bend limiter has one end fixed to the collar, and the bend limiter is dimensioned and formed to direct a cable containing at least one bend insensitive fiber through a determined bend between the collar and the opposite end of the bend limiter such that the fiber acquires a bend radius of less than one inch (25.4 mm).

For a better understanding of the invention, reference is made to the following description taken in conjunction with the accompanying drawing and the appended claims.

### BRIEF DESCRIPTION OF THE DRAWING

In the drawing:
FIG. 1 is a perspective view of an assembled fiber optic cable connector according to the invention;
FIG. 2 is a side view of the connector in FIG. 1, with a dust cover at the left in FIG. 1 removed;
FIG 3 is an exploded view of the cable connector in FIG. 1, illustrating components of the connector and the order in which the components are assembled;
FIG. 4 is an enlarged side view of the connector in FIG. 1, in cross-section; and
FIG. 5 is a side view of a component strength member in the connector, in cross-section.

### DETAILED DESCRIPTION OF THE INVENTION

The development of bend insensitive fibers (BIF) having minimum bend radii in the 5 mm range with no measurable increase in loss, allows cables in which the fibers are contained to form sharper bends when compared with ordinary optical cables. Although a BIF may be subject to the stress caused by a sharp bend, there is no corresponding increase in the fibercs insertion loss. The minimum allowable bend radius for a BIF is therefore based mainly on the long term reliability of the fiber glass, and not on the optical performance of the fiber when under the stress of the bend.

Basically, the inventive cable connector features a connector body of significantly reduced overall length, and a rigid cable bend limiter or boot formed with a bend radius of less than one inch fixed at the rear of the connector. In the presently illustrated embodiment, the boot defines a cable bend of 90 degrees. The point where the cable emerges from the boot after bending behind the connector, is at a distance of only about 1.26 inch (32.1 mm) from the front tip of the connector. This distance corresponds to a point on a conventional optical cable connector well before the point where a cable emerges behind the connector and is in any condition to initiate a bend. Thus, if a cable containing a bend insensitive fiber is terminated in the inventive connector, the space occupied by the connector and cable in front of a module adapter or SFF transceiver in a cabinet or elsewhere, may be reduced up to 30 percent while still meeting all applicable standards for connector compatibility and performance.

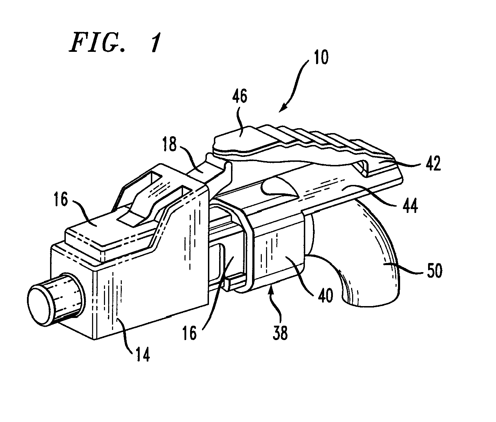

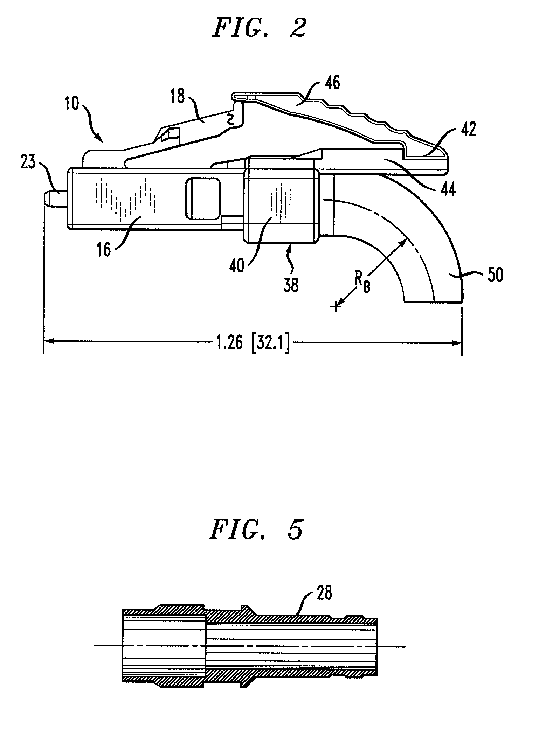

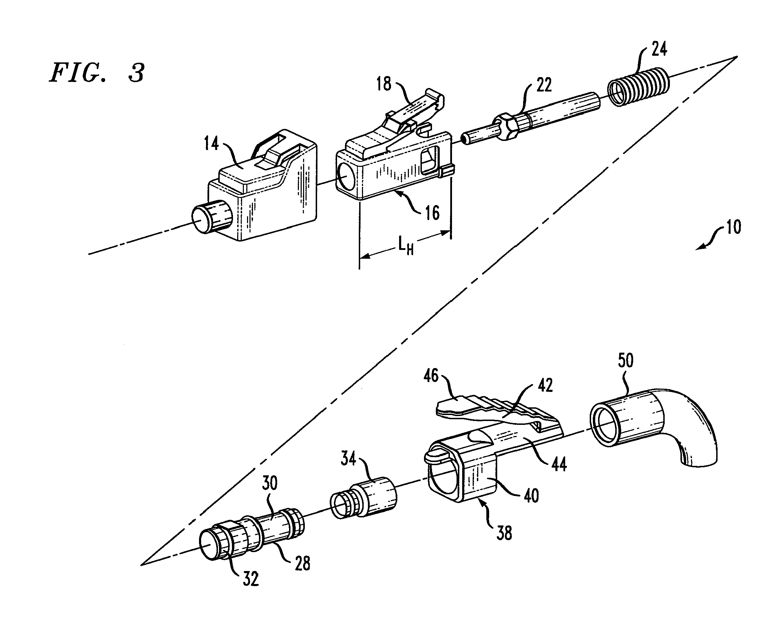

FIG. 1 is a perspective view of a fiber optic cable connector 10 according to the invention. FIG. 2 is a side view of the connector 10 after a protective dust cover 14 at the left in FIG. 1 is removed to expose the front tip of the connector. FIG. 3 is an exploded view of the connector 10 showing its separate components, and the order in which the components are assembled with one another. Although shown and described herein as an LC type connector, persons skilled in the art will understand that the inventive connector may be dimensioned to conform with all requirements applicable to other types of optical cable connectors including, e.g., SC and ST connectors.

Proceeding from the upper left in FIG. 3, the connector 10 may be provided with the mentioned dust cover 14, and it includes a housing 16 having an overall length L_{H} of approximately 0.538 inch (13.67 mm) which is significantly shorter than housings of conventional LC connectors which typically measure about 0.775 inch (19.68 mm) in length. A lock/release latch arm 18 is fixed at one end to the top side of the housing 16 toward the front of the housing, and the arm 18 is inclined upward toward the rear of the connector. The latch arm 18 operates in a known manner either to lock the connector 10 in place when the connector is inserted into a mating adapter and the arm 18 is released, or to release the connector 10 from the mating adapter when the arm 18 is depressed.

The connector 10 also has a ferrule-barrel 22 supported to extend in the axial direction inside the connector housing 16, and an associated compression spring 24 is disposed coaxially over a rear portion of the ferrule-barrel 22 for applying a forward axial bias force to the ferrule-barrel once the connector is assembled. Both the ferrule-barrel 22 and the spring 24 may be formed and dimensioned in a conventional manner, and are arranged inside the connector housing 16 so that a front tip 23 of the ferrule-barrel 22 projects out of an opening in the front end of the housing 16. As known in the art, the ferrule-barrel 22 serves to retain an optical fiber that is inserted through an axial passage in the ferrule-barrel, and to present a polished end face of the fiber where the passage opens at the front tip 23 to allow the fiber to couple optically with another fiber in a mating connector.

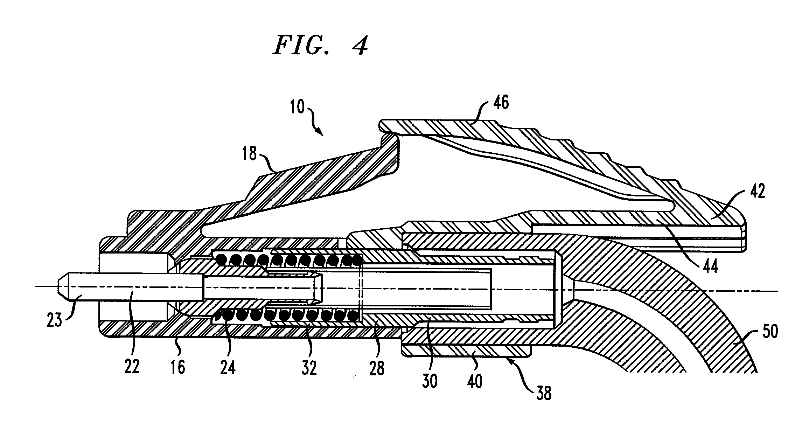

A generally cylindrical retention member 28 in FIG. 3, which is shown in cross-section in FIGS. 4 and 5, serves in part to anchor the strength members of a cable to be terminated by the connector 10. The retention member 28 is also significantly shorter than similar retention members or elements provided in conventional optical cable connectors, and, in the present embodiment, has an overall axial length of only about 0.500 inch (12.70 mm). The member 28 has an axial rear portion 30, and an axial front portion 32. The rear portion 30 has an inside diameter of, e.g., 0.092 inch (2.34 mm) to allow passage of an end length of the terminated cable inside the member 28, and ends of the cable strength members are placed on the outside circumference of the rear portion 30 to be crimped thereon by a surrounding crimp sleeve 34. The front portion 32 of the retention member 28 has a larger inside diameter of, e.g., 0.120 inch (3.05 mm) for receiving a rear portion of the ferrule barrel 22, and a rear portion of the compression spring 24 which seats against an annular step formed inside the retention member 28 at the interface between its front and rear portions 32, 30. A middle section of the retention member 28 has annular bosses or rings on its outside circumference so that, when the member 28 is inserted in the rear of connector housing 16 and spring 24 is compressed, the rings will seat in matching recesses formed in the housing and will retain the member 28 in place against the force of the spring 24.

A yoke 38 is formed with a collar 40, and with a trigger portion 42 that extends rearward of the assembled connector 10. The collar 40 has an axial length of approximately 0.226 inch (5.74 mm), and an inside diameter of approximately 0.200 inch (5.08 mm). The trigger portion 42 includes a base flange 44 that projects rearward from the top of the collar 40 in cantilever fashion substantially parallel to the collar axis, and a finger 46 that inclines upward from a rear end of the flange 44 for contacting and depressing the latch arm 18 toward the front of the connector 10 when assembled. The overall length of the yoke 38 including the collar 40 and the cantilevered trigger portion 42 is approximately 0.650 inch (16.51 mm).

The yoke 38 and the connector housing 16 are joined to abut one another by the retention member 28 portions of which extend inside the collar 40 of the yoke and inside a rear portion of the housing 16. See FIG. 4.

Thus, the length of the connector 10 measured from the front end of the housing 16 to the rear end of the trigger portion 42 of the yoke, is only about 0.538 in. + 0.650 in. = 1.188 inches (30.18 mm).

A cable bend limiter 50 in the form a rigid tube is press fit or otherwise adhered at one end to the inside circumference of the collar 40 as seen in FIG. 4. In addition to allowing for passage of a terminated cable, the inside diameter of the limiter 50 where it joins the collar 40 is sufficient to accommodate the rear portion 30 of the retention member 28 with the surrounding crimp sleeve 34. As used herein to describe the form of the bend limiter 50, the term □tube□ or □tubular□ includes hollow structures whose cross sections may be other than circular cylindrical, and whose walls may not be entirely closed about the periphery of the limiter 50.

In the present embodiment, the cable bend limiter 50 is formed to direct a cable through a 90 degree bend with respect to the connector axis, between a point just behind the collar 40 and the opposite end of the limiter. Preferably, the bend limiter 50 is dimensioned to obtain a bend radius R_{B} for the cable fiber of less than one inch for most if not all of the cable bend, assuming a bend insensitive type of fiber. For example, if the bend limiter 50 obtains a safe fiber bend radius of 0.300 inch (7.62 mm) over a 90 degree cable bend, the distance in the axial direction between the front tip 23 of the ferrule-barrel 22 and the farthest point on the cable surface after the bend may be as little as 1.26 inches (32 mm). If the bend limiter obtains a larger bend radius of, e.g., 0.600 inch (15.24 mm) over a 90 degree cable bend, the farthest distance axially between the tip 23 of the ferrule barrel and the cable surface would still be only about 1.35 inches (34.3mm).

In one embodiment, the cable bend limiter 50 may be molded from a stiff, yet workable and flame retardant polymer such as, e.g., Vestamid□ X7166 available from Evonik Degussa GmbH. The bend limiter 50 may be molded in two halves which are adapted and dimensioned to close about the outer jacket of a cable and the rear portion 30 of the retention member 28, and to latch with one another after the cable has assumed the desired bend radius by use of a mandrel or other conventional tooling. In another embodiment, a narrow slot may be formed in the wall of the bend limiter 50 in the axial direction, so that a cable can be placed inside the limiter by urging the cable laterally through the slot. For cables having an outside diameter of 1.6 mm, the inside diameter of the passage in the bend limiter 50 is preferably about 1.7 mm, and the wall thickness of the limiter is preferably in the range of about 1.0 mm to 1.5 mm.

As noted earlier, the present invention may be realized in optical connectors other than LC type, and with either singlemode or multimode optical fibers having bend insensitive properties. The inventive connector meets a current demand by engineers and purchasing personnel at major network facilities for shorter connector solutions that will allow their systems to interconnect by the use of fiber optic cabling in ever decreasing space.

While the foregoing represents preferred embodiments of the invention, it will be understood by persons skilled in the art that various modifications and changes can be made without departing from the spirit and scope of the invention. Such modifications include, but are not limited to, an optical cable connector dimensioned and formed to accommodate a fiber optic cable in the form of a planar array (*i.e*., a ribbon) of optical fibers. Accordingly, the present invention includes all such modifications and changes as come within the scope of the following claims.

## Claims

1. An optical cable connector assembly, **characterized by**:
a connector housing having an axis, a front end, and a rear end;
a yoke including a collar joined to the rear end of the connector housing and in axial alignment with the housing; and
a tubular cable bend limiter one end of which is fixed to the collar, wherein the bend limiter is dimensioned and formed to direct a cable containing at least one bend insensitive fiber through a determined bend between the collar and the opposite end of the bend limiter such that the fiber acquires a bend radius of less than one inch (25.4 mm).

2. A cable connector assembly according to claim 1, wherein the bend limiter is formed to direct the cable through an approximately 90 degree bend between the collar and the opposite end of the bend limiter.

3. A cable connector assembly according to claim 2, wherein the bend limiter is configured to create a fiber bend radius between approximately 0.300 (7.62 mm) inch and approximately 0.600 inch (15.24 mm).

4. A cable connector assembly according to claim 1, wherein the length of the connector between the front end of the connector housing and a rearmost end of the yoke is not more than about 1.188 inches (30.18 mm).

5. A cable connector assembly according to claim 1, wherein,
(a) the connector housing has an associated lock/release latch arm for locking or releasing the connector to or from a mating connector when the latch arm is depressed; and
(b) the yoke has a trigger portion that includes (i) a base flange that projects from the collar in cantilever fashion in a rearward direction away from the connector housing, and (ii) a finger that inclines upward from a rear end of the flange for contacting and depressing the latch arm on the connector housing.

6. A cable connector assembly according to claim 1, **characterized by**:
a length of an optical cable containing at least one bend insensitive fiber; and
a ferrule barrel supported to extend inside the connector housing in the axial direction, wherein the barrel has an axial through passage formed to retain the bend insensitive fiber in the passage and to present an end face of the fiber where the passage opens at a front tip of the barrel to allow the fiber to couple with another fiber in a mating connector;
wherein the bend insensitive fiber contained in the cable acquires a bend radius of less than one inch (25.4 mm) inside the bend limiter.

7. A cable connector assembly according to claim 6, wherein the cable is directed through an approximately 90 degree bend inside the bend limiter.

8. A cable connector assembly according to claim 7, wherein the bend insensitive fiber contained in the cable acquires a bend radius between approximately 0.300 (7.62 mm) inch and approximately 0.600 inch (15.24 mm) inside the bend limiter.

9. A cable connector assembly according to claim 6, wherein the length of the connector between the front end of the connector housing and a rearmost end of the yoke is not more than about 1.188 inches (30.18 mm).

10. A cable connector assembly according to claim 6, wherein,
(a) the connector housing has an associated latch arm for locking or releasing the connector to or from a mating connector when the latch arm is depressed; and
(b) the yoke has a trigger portion that includes (i) a base flange that projects from the collar in cantilever fashion in a rearward direction away from the connector housing, and (ii) a finger that inclines upward from a rear end of the flange for contacting and depressing the latch arm on the connector housing.

11. A cable connector assembly according to claim 1, **characterized by**:
a tubular retention member constructed and arranged for retaining strength members of a cable to be terminated by the connector, wherein corresponding portions of the retention member extend inside the collar of the yoke and inside a rear portion of the housing for joining the yoke and the housing in axial alignment with one another; and
a ferrule-barrel at least a portion of which is supported inside the retention member in the axial direction of the connector housing, wherein the barrel has an axial through passage formed to retain a cable fiber in the passage and to present an end face of the fiber where the passage opens at a front tip of the ferrule-barrel to allow the fiber to couple with another fiber in a mating connector.

12. A cable connector assembly according to claim 11,
wherein the bend limiter is formed to direct the cable through an approximately 90 degree bend between the collar and the opposite end of the bend limiter.

13. A cable connector assembly according to claim 12,
wherein the bend limiter is configured to create a fiber bend radius between approximately 0.300 (7.62 mm) inch and approximately 0.600 inch (15.24 mm).

14. A cable connector assembly according to claim 11,
wherein the length of the connector between the front end of the connector housing and a rearmost end of the yoke is not more than about 1.188 inches (30.18 mm).

15. A cable connector assembly according to claim 11, wherein,
(a) the connector housing has an associated latch arm for locking or releasing the connector to or from a mating adapter when the latch arm is depressed; and
(b) the yoke has a trigger portion that includes (i) a base flange that projects from the collar in cantilever fashion in a rearward direction away from the connector housing, and (ii) a finger that inclines upward from a rear end of the flange for contacting and depressing the latch arm on the connector housing.

16. A cable connector assembly according to claim 11, **characterized by**:
a length of an optical cable containing at least one bend insensitive fiber, wherein the cable has associated strength members;
the tubular retention member retains the strength members of the cable;
the bend insensitive fiber contained in the cable is retained in the axial through passage in the ferrule-barrel; and
the bend insensitive fiber contained in the cable acquires a bend radius of less than one inch (25.4 mm) inside the bend limiter.

17. A cable connector assembly according to claim 16,
wherein the cable is directed through an approximately 90 degree bend inside the bend limiter.

18. A cable connector assembly according to claim 17,
wherein the bend insensitive fiber contained in the cable acquires a bend radius between approximately 0.300 (7.62 mm) inch and approximately 0.600 inch (15.24 mm) inside the bend limiter.

19. A cable connector assembly according to claim 16,
wherein the length of the connector between the front end of the connector housing and a rearmost end of the yoke is not more than about 1.188 inches (30.18 mm).

20. A cable connector assembly according to claim 16, wherein,
(a) the connector housing has an associated latch arm for locking or releasing the connector to or from a mating connector when the latch arm is depressed; and
(b) the yoke has a trigger portion that includes (i) a base flange that projects from the collar in cantilever fashion in a rearward direction away from the connector housing, and (ii) a finger that inclines upward from a rear end of the flange for contacting and depressing the latch arm on the connector housing.
